# EUROPEAN PATENT APPLICATION

(11) **EP 4 848 700 A1**
(43) Date of publication of application: **02.12.2026**
(21) Application number: 25382528.5
(22) Date of filing: 26.05.2025
(51) Int. Cl.: H04L 69/14, H04W 4/50, H04W 4/80

(54) **INTERFACE ROUTING FOR MULTIPLE ENABLED CONTACTLESS PROFILES**

(71) Applicant: Giesecke+Devrient Mobile Security Germany GmbH, 81677 München (DE)
(72) Inventor: GARRIDO, Jose Antonio, 08820 El Prat de Llobregat (Barcelona) (ES); GIFRE, Clara, 08820 El Prat de Llobregat (Barcelona) (ES); PATIÑO, David, 08820 El Prat de Llobregat (Barcelona) (ES); RUAU, Federico, 08820 El Prat de Llobregat (Barcelona) (ES)
(74) Representative: LKGLOBAL Partnerschaftsgesellschaft mbB

(57) **Abstract**

The present invention relates to a method for managing communication with a gate in a contactless communication environment. The method involves enabling at least two hosts, each defined as a logical entity capable of operating at least one application service. For each enabled host, a dedicated logical communication channel, referred to as a pipe, is created. Each pipe establishes a connection between a gate of a host controller and an application gate of the corresponding host. The gate serves as an access point to a communication service within the host controller, while the application gate provides access to the application service within the host. The pipes are configured to provide dedicated connections from the application gates of the hosts to a common gate of the host controller, enabling structured and parallel communication between multiple hosts and the communication infrastructure.

## Description

In conventional implementations of multi-profile secure elements (e.g., multiple virtual Universal Integrated Circuit Cards (UICCs) or secure domains), the host controller, e.g., a host controller embedded in a Contactless Front-end (CLF), typically maintains a single active communication profile at a time. A profile in this context refers to a logical configuration that includes a specific host (e.g., UICC), its associated services, and the parameters required for communication (e.g., gate mappings, pipe configurations, RF settings).

Herein, challenges arise with switching profiles just in time. Switching from one profile to another may require deactivation of a current single wire protocol (SWP) session, followed by activation of a new session. This may involve power cycling or reinitializing the SWP interface; reconfiguring the CLF's internal parameter registry to reflect the new profile's gate and pipe associations, and re-establishing logical pipes and possibly re-authenticating services. These operations may introduce delays and may increase the likelihood of failures if the switch is not completed in time for an NFC transaction (e.g., tapping a transit gate or payment terminal).

Applications or middleware layers may need to explicitly trigger the profile switch, adding complexity to the system design and increasing the risk of misconfiguration.

The present invention addresses these limitations by providing a method and device for enabling simultaneous accessibility of applications from multiple enabled profiles, preferably without requiring runtime switching.

This is achieved through establishing concurrent pipes. Each profile, i.e. host, can be assigned its own application gates and logical pipes. These pipes can be pre-established and mapped to the same host controller gate, i.e. CLF gate. The gate can be an RF Gate or Connectivity Gate, allowing multiple services to be reachable concurrently. The host controller can provide unified gate routing by using pipe IDs to demultiplex incoming messages and route them to the correct host and service. This can eliminate the need to reconfigure the host controller (CLF) and/or SWP interface dynamically.

The present invention realized "always-on" profile availability. All enabled profiles remain logically active and ready to respond to contactless interactions. The host controller can arbitrate access to shared resources (like the RF Gate) using predefined policies and/or priority rules.

From the user's perspective, services from different profiles can be seamlessly available. No manual selection, app launch, or system-level switching is required before tapping the device.

In summary, the present invention achieves the advantages of reduced latency in contactless transactions, improved reliability in multi-service environments (e.g., dual SIM, multi-wallet), simplified architecture with fewer runtime dependencies, and enhanced user experience with transparent access to all services.

According to a first aspect, the present invention relates to a method for communication with a gate, preferably for communication between a host controller and a plurality of hosts via the gate, more preferably for communication between a contactless front-end and at least two hosts of a plurality of hosts via an RF gate. The method comprises the step of enabling at least two hosts. Each host is defined as a logical entity configured to operate at least one service. The method further comprises creating a pipe for each enabled host. The pipe is defined as a separate logical communication channel between the corresponding host and a host controller. The pipe can be configured to link a gate of the host controller with an application gate of the host. A gate can be defined as an entry point towards a communication service operated inside the host controller. Further, an application gate can be defined as an entry point towards the at least one service operated inside the corresponding host. The pipes are configured to provide dedicated connections from the application gates to the same gate of the host controller.

The method is preferably applicable in the context of the ETSI TS102 622 specification describing functions of the Host Controller Interface (HCI) between a UICC and a Contactless Front-end (CLF).

A host can be defined as a logical entity that communicates with the CLF via the HCI protocol. Examples include a UICC (e.g., SIM card), an embedded Secure Element (eSE), and an application processor. The host can provide services and communicate with the CLF through gates and pipes.

A service can be defined as a functional capability (e.g., payment, transit, access control, etc.) provided by a host. Services can be accessed via application gates and can be mapped to pipes for communication.

A host controller can be integrated in the CLF and can be configured to manage communication between hosts and an external contactless interface, including routing, pipe management, and gate access control.

In the context of contactless communication architectures host controller and CLF can relate to distinct functional entities The CLF can be a hardware and software component configured to manage an RF interface and handle communication with external contactless terminals (e.g., NFC readers, POS terminals, access gates, etc). Primary functions include RF field control (activation, modulation, demodulation), protocol handling (e.g., ISO/IEC 14443, ISO/IEC 18092), routing messages between external terminals and internal hosts, managing gates and pipes, in particular as defined by a host controller interface (HCI), and/or gate and pipe management** (as defined in HCI). The CLF can be embedded in an NFC controller of a of a mobile device or secure element.

The host controller can be a logical control entity configured to manages a HCI protocol stack, including the creation and management of pipes, gates, and/or message routing between the CLF and one or more hosts (e.g., UICC, embedded SE, application processor). Thereto, the host controller can be configured to implement the HCI protocol, manage pipes (open/close), assign pipe IDs, manage gate access and ownership, rout HCI messages between hosts and the CLF. In the following CLF and host controller may be used interchangeably, wherein specific functions can be attributed to the CLF, respectively the host controller depending on the context.

The host controller can be implemented within the CLF or as a separate software layer on an application processor or secure element.

A gate can be defined as a logical entry point to a functional module within a host or the CLF. Gates can be of a specific type. A CLF gates, e.g., a communication gate (RF Gate), an administrative gate (Admin Gate), or a management gate (Connectivity Gate). An application gate can be a gate on the host side that provide access to services. Generally, gates can be defined as endpoints for pipes and may define the functional context of a communication.

The communication gate, specifically an RF Gate, can be a logical interface within the host controller that can be configured to provide access to a communication layer, preferably an RF communication layer. The communication gate can be configured to control the activation and deactivation of the RF field. Further, the communication gate can be configured to handle protocol negotiation and data exchange with external contactless devices (e.g., ISO/IEC 14443, ISO/IEC 18092). The communication gate can be configured as a gateway for all data exchanged between the external RF interface and hosts, specifically internal hosts. Thereto the RF gate can serve as an entry point for RF communication between host controller and an external contactless environment.

Messages from a host intended for an external contactless reader can be routed through the communication gate. Advantageously, the communication gate is configured for non-exclusive access control by allowing a plurality of pipes to be open to the communication gate at any given time. Conflict free routing can be ensured by suitable measures to uniquely identify communication targets, e.g., specific applications (via AID) and corresponding specific pipes (via pipe ID).

The communication gate can be configured to support a set of HCI commands and events

A pipe may be created between a host's application gate and a communication gate in the host controller to enable RF communication. Counter to the standard ETSI TS 102.622 V15.0.0 (2018-12), the host controller may not enforce that only one pipe can be active in relation to the RF interface. Specifically, multiple pipes may be active in relation to the RF interface.

The host controller can be configured to arbitrate through which pipe a communication is sent to reach the intended host, i.e., application gate. This is beneficial in multi-host environments to ensure conflict free and unambiguous access to the RF interface.

Specifically, an application gate can be located on the host side (e.g., UICC) and may provide access to a specific service. Thereto, the application gate can act as an entry point for a service to communicate with the host controller, i.e., CLF.

A pipe can be defined as a logical communication channel between two gates - one on a host and one on the host controller. Further, a pipe can be Identified by a unique pipe identifier (pipe ID) and can be created and managed via the administrative gate. A pipe can be configured to support multiplexing over a single physical interface (e.g., SWP). A pipe may enable isolated, dedicated communication between services and the host controller.

Enabling at least two hosts can relate to activating multiple logical entities (e.g., UICC and embedded SE) for communicating with the host controller. Each host can have one or more application gates, i.e., card application gates. Each application gate can be linked to one service, preferably to a plurality of services. Each service can be realized by a dedicated application at the host.

Creating a pipe for each enabled host can relate to establishing a pipe between each host's application gate and a gate on the host controller. Preferably, this can be achieved by using a pipe management protocol via the administrative Gate. In that process multiple pipes from different application gates can be linked to the same gate on the host controller. Preferably, the gate on the host controller is a communication gate.

The pipes can be configured to link application gates to the same gate of the host controller. Thereto, multiple services, preferably from different hosts, can connect to the same host controller gate, e.g., the RF Gate). Multiple active pipes may be allowed for the RF Gate.

The present method and device architecture supports multiple logical pipes over a single physical interface (e.g., single wire protocol - SWP), enabling concurrent services. The host controller may use pipe identifiers to route messages to the correct gate and host. Each pipe can be isolated, ensuring secure and conflict-free communication.

According to an embodiment, the method may incorporate the following functions.
- Providing a contactless front-end comprising an RF gate configured to interface with an external contactless communication terminal;
- Establishing a plurality of logical communication pipes, each pipe connecting the RF gate to a corresponding host, wherein each host is associated with at least one application service;
- Maintaining the plurality of pipes in an open state concurrently, such that each pipe is available for communication between the RF gate and its corresponding host;
- Receiving a contactless communication request at the RF gate from the external terminal;
- Routing the communication request to a targeted host of a plurality of hosts via the respective pipe;
- Receiving responses from the corresponding host via their respective pipe;
- Processing the received response at the RF gate to generate a composite response
- Transmitting the selected or composite response to the external terminal via the RF interface.

In an embodiment, the method can comprise opening the pipes and connecting each open pipe to the gate such that each connected pipe is continuously available for communication between the corresponding host and the host controller. This achieves the advantage that

By keeping all pipes open and connected, services hosted on different hosts can be immediately accessible without requiring dynamic pipe creation or gate reconfiguration. For example, a mobile device with both a transit pass on an UICC and a payment wallet on an embedded SE can respond to either type of terminal (e.g., subway gate or POS terminal) without delay or user intervention.

Opening pipes in advance can avoid latencies associated with pipe negotiation, gate discovery and/or parameter initialization.

In environments where multiple services may be triggered by the same RF event (e.g., dual-interface cards or multi-profile devices), pre-connected pipes can ensure that the host controller can route messages deterministically, preferably without race conditions and/or arbitration delays.

For example, a dual-SIM phone with two active mobile payment profiles can ensure that the correct service responds based on terminal type or transaction context.

Further, the advantage can be achieved that applications and middleware layers may no longer need to monitor pipe states, trigger pipe creation dynamically and/or handle fallback logic for unavailable gates. This can reduce code complexity, power consumption, and/or error handling overhead.

Additionally an improved user experience can be provided as the user can perceive all services as "always on", regardless of which secure element or profile they belong to. For example, the user may tap their phone to pay, unlock a door, or validate a ticket without switching apps, selecting profiles, and/or waiting for background processes.

In a further embodiment, opening the pipe for a host can be performed in response to enabling the corresponding host. The method can further comprise assigning a pipe identifier to each pipe and routing communication from the gate to the corresponding host via the corresponding pipe while the pipe is open according to the pipe identifier.

Thereby, a dynamic and event-driven mechanism for establishing communication channels between hosts and the host controller can be realized. Rather than pre-establishing all pipes statically, a system implementing the method can react to the activation of a host profile.

The use of a triggered pipe opening mechanism, e.g., when an ENABLE PROFILE command is executed, can provide an optimized usage of resources by only allocating communication channels when they are needed. This renders the present method particularly suited for resource-constrained environments, such as embedded secure elements or low-power devices, where memory and processing overhead may need to be minimized. For example, a dual-profile UICC may keep a corporate profile disabled until a user enters a secure zone or authenticates with a biometric token. Upon enabling the profile, the system opens the associated pipe and begins routing communication.

Assigning a unique pipe identifier to each pipe ensures that the host controller can unambiguously route messages to the correct host and gate. Thereby scalability can be supported, allowing for managing a large number of concurrent services and hosts without confusion and/or collision. For example, in a device supporting multiple virtual secure elements (e.g., for different mobile network operators), each element can be assigned a distinct pipe upon activation, enabling parallel operation without interference.

The pipe can be created by executing a specific command, for example, an ADM_CREATE_PIPE command. The specific command can have three arguments: a source gate ID, a destination host ID and a destination gate ID. The source host ID may not be part of the arguments as it can be implicitly derived from the context in which the command is issued.

The source gate ID can be a unique identifier for the gate, e.g., gate of the wireless communication service (NFC), on the source host, e.g., host controller, from which the pipe originates. It can represent the entry point of the data or service flow on the sending side.

The destination host ID can be a unique identifier for the host, e.g., a secure element and/or UICC, that is the intended recipient of the pipe. This ID can ensure the pipe is routed to the correct destination system.

The destination gate ID can be a unique identifier for the gate, e.g., application gate on the destination host where the pipe terminates. It determines the specific service or endpoint on the destination host that will handle the incoming data.

The source host ID can be a unique identifier for the host, e.g., host controller, that initiates the pipe.

A constraint can be associated with executing the command. Specifically, the service that can be used on the pipe can be determined by the destination gate, preferably only by the destination gate. Any gate identifier can be used as the source gate. However, only one pipe may be allowed for each combination of source host/source gate and destination host/destination gate.

This constraint can be implemented according to two embodiments.

In a first embodiment, the definition of the specific command, e.g., ADM_CREATE_PIPE, can be modified: An optional argument for the Source Host ID can be introduced. Thereby, the source host can be an explicit parameter, allowing routing mechanisms to utilize this information directly.

Thereto, the method can comprise generating a pipe using a pipe creation command with the parameters source gate ID, destination host ID, destination gate ID and source host ID.

Alternatively, in a second embodiment, the specified definition, i.e., without the Source Host ID, can be implemented, keeping the existing command structure unchanged. The Source Gate ID can be used to implicitly encode the source host context. This can be achieved by assigning a unique source gate value for each virtual host, effectively distinguishing the source host/gate pair without modifying the command interface.

Thereto, the method can comprise encoding the source host context in the Source Gate ID, i.e. an application gate ID or gate ID, by assigning a unique source gate value for each virtual host.

Since Pipe IDs are dynamically assigned, relying on fixed or chosen values -such as gate or host identifiers -provides greater stability and predictability in routing and service management. The routing logic within the host controller may use any unambiguous ID, or combination of the above mentioned identifiers as a key to determine the destination of each message. This allows the host controller to abstract away the physical interface (e.g., SWP) and treat all communication as logical flows, regardless of the underlying transport. For example, a contactless transaction initiated by an external reader can be received by the host controller, which uses the corresponding ID to forward the message to the correct host, independent of whether the corresponding application is a payment application on the UICC or a loyalty application on an embedded SE.

By linking pipe creation to profile enablement, access control policies can be enforced at the communication layer. Preferably, only hosts with an active and authorized profile can establish pipes and participate in contactless communication. For example, a mobile device may restrict access to a government-issued secure profile unless the device is in a specific geographic region or connected to a trusted network.

The provided method supports modular deployment of services. New profiles can be added or removed without affecting the core communication infrastructure. Advantageously, pipe management can become declarative and policy-driven, rather than hardcoded. For example, a mobile wallet app can dynamically load a new service module (e.g., a transit card) and trigger the creation of a pipe to the host controller, preferably without requiring a firmware update or system reboot.

In a further embodiment, at least two pipes between the gate and the corresponding application gate enabled hosts are open simultaneously.

This embodiment describes a system architecture in which multiple logical pipes are simultaneously active between a shared gate, specifically the communication gate at the host controller, and application gates of different enabled hosts. This setup can enable parallel communication paths. Thereby, the communication structure can be extended beyond the capabilities of traditional sequential and/or single-host models.

Based on simultaneously open pipes multiple services can be combined to a single contactless interaction. This can be especially advantageous for multi-purpose terminals or bundled services. For example, a transit terminal could validate a ticket via a first host and/or application and update a loyalty program via a second host and/or application in one tap, preferably without requiring sequential interface management, respectively sequential communication.

In systems where multiple secure elements or devices collaborate, simultaneous pipes can enable real-time coordination across domains. For example, a smartphone may communicate with both a wearable device, e.g., a smartwatch with a secure element, and a key fob with an embedded secure elementto perform a multi-factor authentication handshake.

Simultaneously open pipes may support virtualized secure elements and/or multi-tenant environments, where each tenant, e.g., mobile operator, enterprise, and/or service provider, may operate in isolation but may remain concurrently accessible. For example, a device with multiple virtual UICCs, e.g., for different carriers and/or eSIM profiles, can keep all profiles active and reachable through separate pipes -without switching or reinitialization.

In a further embodiment, the method can comprise disabling an enabled host, preferably when executing a DISABLE PROFILE command, and closing the pipe of the corresponding profile in response to disabling the corresponding host.

Thereby, a controlled deactivation mechanism for hosts and their associated communication channels can be realized. A host may no longer be needed or authorized such that its communication path can be securely and cleanly terminated. The use of a 'DISABLE PROFILE' command allows for explicitly managing the lifecycle of each host. This can enable implementing temporary profiles and/or policy-driven profile activation and deactivation. For example, a corporate profile on a UICC may be disabled automatically after business hours and/or when the device leaves a secure facility.

Closing the pipe upon host deactivation can ensure that no residual communication can occur with a disabled or unauthorized host. This can achieve the advantage that the risk of data leakage, unauthorized access, and/or replay attacks can be minimized.

A pipe may consume system resources (e.g., memory, routing table entries, etc.). Closing unused pipes may allow the host controller to reclaim resources and thereby maintain optimal performance. This can be particularly useful in constrained environments like embedded systems or IoT devices. According to a pipe capacity limit, pipes may be dynamically allocated and deallocated, in particular as the user switches between profiles and/or services.

The ability to disable hosts and close pipes in real time can support dynamic security policies. Preferably, profiles can be enabled or disabled based on user authentication, geolocation, network conditions, and/or risk scoring. For example, a high-risk transaction or communication may trigger disabling all non-essential profiles and close their pipes to reduce the attack surface.

Further, a service, respectively host and/or application, can be session-oriented. Such a service may be active, i.e., have a connected open pipe according to a predetermined time limit and should only be active for a limited time.

Explicit host disabling and pipe closure can provide clear audit points for compliance with security standards (e.g., PCI-DSS, eIDAS). Preferably, logs can show when a profile was disabled and/or its communication channel terminated.

According to a further embodiment the gate is an RF gate configured to support a plurality of concurrent pipes each connecting the RF gate to a corresponding host, and or to provide access to an RF communication service.

The pipe topology for RF gates according to the present invention provides an enhanced RF gate architecture that deviates from the traditional constraint in ETSI TS 102 622, where only one pipe can be open to the RF gate at a time. Instead, multi-pipe capable RF gates are defined, enabling concurrent communication with multiple hosts through the same RF interface.

The RF gate according to an embodiment can be defined as a multiplexed access point that can be configured to simultaneously serve multiple hosts. Each host can expose its own RF-based service (e.g., payment, access, ticketing) through a dedicated pipe, while sharing the same physical RF interface.

With multiple RF services concurrently exposed, a system implementing the method can respond to a broad range of terminals without requiring user interaction and/or profile switching. This can achieve the advantage of supporting a universal tap-and-go experience across a plurality of infrastructures, in particular a heterogenous set of hosts. For example, a user may tap their phone at a multi-function kiosk that may support both payment and identity verification. The terminal may select the appropriate service, respectively services from the concurrently available RF pipes.

Corresponding to the plurality of pipes the host controller can be configured to determine which host's RF service should respond based on at least one of terminal capabilities, service priority, user preferences, and/or transaction context. Thereto the host controller can be configured to apply an arbitration logic. Advantageously, the method can be used for RF service virtualization, where multiple virtual RF interfaces can be presented over a single physical antenna. Each pipe can be configured as a virtual RF endpoint, in particular by enabling multi-tenant RF environments. For example, a single device may emulate multiple contactless cards (e.g., student ID, hotel key, metro card, etc) simultaneously, each mapped to a different host and pipe.

Further, the method may provide an increased fault tolerance. If one host and/or service fails, remaining hosts may still be accessible through their respective pipes.

According to a further embodiment, the method can comprise the steps processing communications from at least two pipes received at the gate, and providing corresponding responses to the hosts associated with the respective pipes to enable multi-service communications within a single RF session.

An RF session can refer to a continuous, uninterrupted communication window established between the host controller and an external contactless terminal (e.g., NFC reader, POS terminal, access gate). The session can begin when the RF field is activated and may end according to at least one of the following conditions: the RF field is deactivated, the external terminal disconnects, a timeout and/or protocol-defined termination occurs.

This embodiment can enable the host controller to process multiple service requests within the same RF session, each routed through a different pipe to a different host. Preferably, composite transactions and/or multi-domain interactions can thereby be enabled.

The host controller can be configured to aggregate, sequence, and/or prioritize responses from multiple hosts before sending a final response to the terminal. This allows for context-aware decision-making at the RF gate level. For example, if both a payment and a coupon are available, the system can apply the coupon first, then process the payment. The present method can be adapted to support ISO/IEC 14443, ISO/IEC 18092 (NFCIP-1), and/or EMVCo protocols.

According to a second aspect the present invention relates to a communication device for short range wireless communication. The communication device can comprise a host controller, preferably a contactless front-end (CLF), comprising at least one gate. The at least one gate can be configured to provide access to an RF communication function. The host controller can be configured to route communication between a plurality of hosts and the gate via a plurality of simultaneously open pipes. Each of the at least two hosts can comprise an application gate and at least one application. Each host of the at least two hosts can be configured to enable access of its at least one application to the RF communication function via the corresponding dedicated pipe connecting the gate and its application gate.

Thereby, the communication device can comprise a logical interface that enables contactless applications hosted on a UICC. The communication device defines characteristics of an interface (e.g., host controller interface) which enables communication between hosts embedded in the UICC and the host controller embedded in the contactless-front end. The interface specifies an implementation for contactless applications using the UICC and the CLF.

The communication device achieves the advantage that a CLF logic can be extended to accept the creation of more than one pipe for each RF gate. All pipes for an RF gate can be treated as different logical interfaces independent from the type of host the respective pipe originates from. A routing logic for pipes can be applied to all pipes, preferably multiple pipes connecting to a single RF gate. Specifically, when a profile is enabled, e.g., by executing an ENABLE PROFILE command for a contactless profile, a new pipe can be created against the appropriate RF host(s), and configured with the current contactless parameter set of the profile. All activity from that profile may always go be routed through the corresponding pipe created on enable. All incoming activity from the pipe will go to the applications of the profile. Thereto, the profile can apply suitable routing.

When an enabled profile is disabled, e.g., by executing a DISABLE PROFILE command for the corresponding contactless profile, the associated pipes can be closed, freeing up any resources on the CLF.

This can achieve the advantage of seamless usage of contactless applications in multiple enabled profile use cases. A communication device according to the invention can enable use cases where an offcard entity may want to communicate concurrently with an application from more than one profile (e.g. work and personal profiles). The system can reduce the amount of memory writes on persistent memory each time the contactless profile changes.

**In** a further embodiment, the host controller can be configured to connect the application gate of each of the at least two hosts via a dedicated pipe to the gate.

**In** a further embodiment, the host controller can be configured to create a pipe between the gate and the application gate of each host of the at least two hosts, when the corresponding host is enabled and to create a pipe with a set of current contactless parameters. The host controller can further be configured to maintain a routing table configured to map a pipe identifier of the pipe to a corresponding pair of gate and application gate, and to map the gate to the corresponding host. The host controller can be configured to update the routing table in response to a pipe being created and a pipe being deleted.

**In** a further embodiment, the host controller can comprise a plurality of gates. Each gate of the plurality of gates can be configured to provide access to a different RF communication function. The host controller can be configured to route communication for each gate of the plurality of gates to a plurality of hosts via a plurality of simultaneously open pipes.

**In** a further embodiment, the at least one gate can be provided per specific RF functionality, such that a single gate can be available per specific RF functionality. The host controller can be configured to create a pipe from each enabled host to the single gate to enable the specific RF functionality for each enabled host.

**In** a further embodiment, the host controller can be configured to multiplex the pipes between the gate and the application gates via a single physical interface (SWP).

According to a further aspect, the present invention relates to a computer program product comprising a computer-readable medium bearing instructions executable by a communication device. The instructions, when executed by the communication device, cause the communication device to perform steps of the method according to any one of the above embodiments.

According to a further aspect the present invention relates to a computer-readable data carrier, comprising a non-transitory computer-readable medium. The medium has stored thereon a computer program according any one of the above embodiments . The computer program, when executed by a communication device, causes the communication device to perform the method according to any one of the above embodiments.

### BRIEF DESCRIPTION OF THE DRAWINGS

The subject matter will hereinafter be described in conjunction with the following drawing figures, wherein like numerals denote like elements, and wherein:
Fig. 1 shows a schematic representation of the method according to an embodiment; and
Fig. 2 shows a schematic representation of the communication device according to an embodiment.

### DETAILED DESCRIPTION OF THE DRAWINGS

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

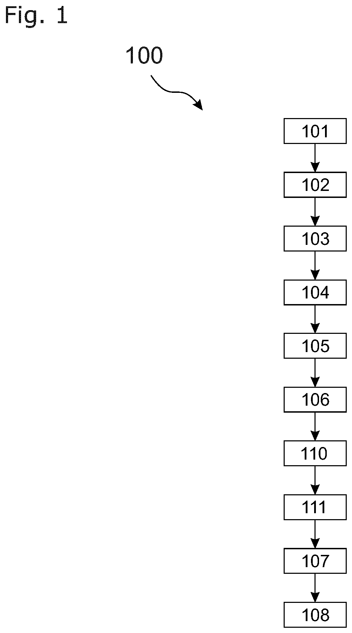

Fig. 1 shows a schematic representation of the method 100 for using multiple pipes with a single RF gate according to an embodiment. The method 100 specifically relates to managing communication between a communication device and an RF gate within a contactless front-end (CLF) environment. The method enables seamless multi-service communication during a single RF session by leveraging multiple logical communication channels (pipes) that connect various hosts to the RF gate.

The method 100 can be initiated by enabling 101 at least two hosts. This step ensures that the system is prepared for multi-host communication by activating the necessary components.

For each enabled host, a dedicated logical communication channel, i.e., pipe, can be created 102. Each pipe can connect103 a gate within the host controller to an application gate within the host. The gate in the host controller can acts as the access point to the RF communication service, while the application gate serves as the entry point to the host's application service.

Each pipe can be is uniquely identified by assigning 105 a pipe identifier (pipe ID) and can be associated with a source gate (typically in the host) and a destination gate (typically in the CLF).

Creating 102 a pipe can involve the host querying the CLF to discover available gates and sending a specific command to create a pipe to the CLF, specifying the source and destination gates. The CLF may respond with a unique pipe ID, which is used for all subsequent communication over this pipe. This process can ensure that each logical connection is explicitly defined and managed.

Once a pipe is created, it can subsequently be opened 103 to make it available for communication. The host may send a specific command to the CLF to open the pipe. The CLF may acknowledge the command, indicating that the pipe is now active and ready for data exchange. Opening a pipe may transitions the pipe from an inactive to an active state, enabling the flow of commands and events.

After a pipe is opened, the host can send commands through the pipe which the CLF routes to the appropriate gate based on the pipe configuration. Each gate can be associated with a specific HCI service (e.g., connectivity, identity management, secure element access). Thereby, the host can access and control various CLF services in a modular and scalable way.

Each pipe can be subject to access control policies, ensuring that only authorized hosts can create or use certain pipes. This is critical in environments where multiple applications or secure elements coexist, respectively connect to a single gate at the host controller, respectively the CLF.

The hosts can be dynamically disabled 107 when no longer needed. This can be achieved by issuing a DISABLE PROFILE command. Upon disabling a host, the associated pipe can be closed, effectively terminating communication through that channel and optimizing system resources. In response to disabling 107 the corresponding host, the pipe of the corresponding host can be closed 108.

The RF gate is configured to handle multiple concurrent pipes. This configuration allows it to serve as a central access point for multiple hosts, each connected via a dedicated pipe, thereby enabling simultaneous access to the RF communication service.

During an active RF session, the RF gate processes 110 incoming communications from multiple pipes and generates 111 appropriate responses for each host. This capability ensures that multiple services can be handled concurrently, enhancing the efficiency and responsiveness of the system.

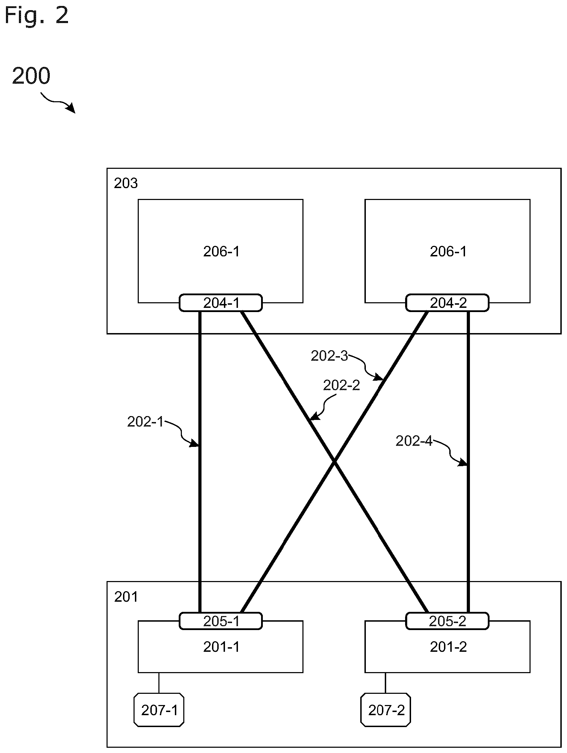

Fig. 2 shows a communication device 200 for short-range wireless communication, such as NFC, comprising a host controller 203 and a plurality of hosts 201 according to an embodiment of the invention. At the core of the communication device 200 is the host controller 203, which includes at least one gate 204. This gate 204 can be configured to provide access to an RF communication function 206, serving as the interface through which RF services are accessed and managed.

The host controller 203 can be configured to route communication between multiple hosts 201-1, 201-2 and the gate 204-1 via a plurality of simultaneously open pipes 202-1, 202-2. Each host 201-1, 201-2 can comprise at least one corresponding application gate 205-1, 205-2 and at least one application 207-1, 207-2. The application gate 205-1, 205-2 of each host 201-1, 201-2 serves as the entry point for the corresponding application 207-1, 207-2 to access the RF communication function 206-1. For each host 201-1, 201-2, dedicated pipes 202-1, 202-2 can be established, connecting the gate 204-1 of the host controller 203 to the corresponding application gates 205-1, 205-2 of the hosts 201-1, 201-2. This dedicated pipes 202-1, 202-2 ensure that each application 207-1, 207-2 can independently and securely access the corresponding RF communication function 206-1.

The host controller 203 is further configured to dynamically create a pipe 202 between the gate 204 and the application gate 205 of each host 201 when the corresponding host 201 is enabled. Each pipe 202 is created with a set of current contactless parameters, ensuring compatibility with the RF communication function 206. To manage these connections, the host controller 203 can maintain a routing table configured to map each pipe identifier of a pipe 202 to the corresponding pair of gate 204 and application gate 205, and to map each gate 204 to the corresponding host 201. The routing table is updated by the host controller 203 in response to the creation or deletion of a pipe 202, ensuring accurate and current routing information.

In an extended configuration, the host controller 203 may comprise a plurality of gates 204-1, 204-2, with each gate 204-1, 204-2 configured to provide access to a different RF communication function 206-1, 206-2. In this configuration, the host controller 203 can be capable of routing communication for each gate 204-1, 204-2 of the plurality of gates to a plurality of hosts 201-1, 201-2 via a plurality of simultaneously open pipes 202-1 to 202-4. This enables the communication device 200 to support multiple RF services 206-1, 206-2 concurrently, with each gate 204-1, 204-2 handling a specific RF communication function 206-1, 206-2 and serving multiple hosts 201-1, 201-2 simultaneously.

Furthermore, the communication device 200 may be configured such that each gate 204 is provided per specific RF functionality 206, meaning that a single gate 204 is available for each specific RF functionality 206. In this case, the host controller 203 is configured to create a pipe 202 from each enabled host 201 to the respective single gate 204, thereby enabling the specific RF functionality 206 for each enabled host 201.

The host controller 203 can also be configured to multiplex the pipes 202 between the gate 204 and the application gates 205 via a single physical interface, such as the Single Wire Protocol (SWP). This allows multiple logical connections to coexist over a single hardware link, optimizing space and power consumption in compact mobile devices.

Additionally, the host controller 203 can be configured to operate a plurality of logical service interfaces, LSIs, with each LSI associated with a logical service. Each LSI is mapped to a corresponding pipe 202, enabling the system to manage and isolate different services effectively. This mapping ensures that each logical service operates within its own context while sharing the same physical infrastructure, thereby enhancing modularity, scalability, and service differentiation within the communication device 200.

The RF gate can be implemented within an NFC controller embedded in a mobile device, enabling seamless interaction with external NFC terminals. The host controller may be integrated into the device's operating system, managing virtual profiles and secure elements.

The method can support concurrent access to various services such as mobile payments, access control, and/or loyalty programs, all within a single RF session and without requiring user intervention.

## Claims

1. Method (100) for communication with a gate, comprising:
enabling (101) at least two hosts (201) , wherein each host (201) is defined as a logical entity configured to operate at least one application service;
creating (102) a pipe for each enabled host (201),
wherein the pipe (202) is defined as a separate logical communication channel between the corresponding host and a host controller (203),
wherein the pipe (202) is configured to link a gate (204) of the host controller (203) with an application gate (205) of the host (201),
wherein the gate (204) is defined as an entry point towards a communication service operated inside the host controller (203) and
an application gate (205) is defined as an entry point towards the at least one application service operated inside the corresponding host (201);
wherein the pipes (202) are configured to provide dedicated connections from the application gates (205) to the same gate (204) of the host controller (203).

2. Method (100) according to claim 1, comprising
opening (103) the pipes (202); and
connecting (104) each open pipe (202) to the gate (204) such that each connected pipe (202) is continuously available for communication between the corresponding host (201) and the host controller (203).

3. Method (100) according to claim 2, wherein opening (103) the pipe (202) for the host (201) is performed in response to enabling (101) the corresponding host (201),
wherein the method (100) further comprises:
assigning (105) a pipe identifier to each pipe (202); and
routing (106) communication from the gate (204) to the corresponding host (201) via the corresponding pipe (202) while the pipe (202) is open according to the pipe iden tifier.

4. Method (100) according to any one of the preceding claims,
wherein at least two pipes (202-1, 202-2) between the gate (204) and the corresponding application gates (205-1, 205-2) of enabled hosts (201-1, 201-2) are open simultaneously.

5. Method (100) according to any one of the preceding claims, comprising:
disabling (107) an enabled host; and
closing (108) the pipe (202) of the corresponding host (201) in response to disabling (107) the corresponding host (201).

6. Method (100) according to any one of the preceding claims,
wherein the gate (204) is an RF gate configured to
support a plurality of concurrent pipes (202) each connecting the RF gate to a corresponding host (201); and
provide access to an RF communication service (206).

7. Method (100) according to any one of the preceding claims, comprising
processing (110) communications from at least two pipes (202-1, 202-2) received at the gate (204), and
providing (111) corresponding responses to the hosts (201) associated with the respective pipes (202) to enable multi-service communications within a single RF session.

8. Communication device (200) for short range wireless communication, with a host controller (203) comprising at least one gate (204), wherein the at least one gate (204) is configured to provide access to an RF communication function (206);
wherein the host controller (203) is configured to route communication between a plurality of hosts (201) and the gate (204) via a plurality of simultaneously open pipes (202),
wherein each of the at least two hosts (201) comprises an application gate (205) and at least one application (207), wherein each host (201) of the at least two hosts (201) is configured to enable access of its at least one application (207) to the RF communication function via the corresponding dedicated pipe (202) connecting the gate (204) and its application gate (207).

9. Communication device (200) according to claim 8,
wherein the host controller (207) is configured to connect the application gate (205) of each of the at least two hosts (201) via a dedicated pipe (201) to the gate (204).

10. Communication device (200) according to any one of claims 8 and 9,
wherein the host controller (207) is configured to:
- create a pipe (202) between the gate (204) and the application gate (205) of each host (201) of the at least two hosts (201), when the corresponding host (201) is enabled;
- create a pipe (202) with a set of current contactless parameters; and
- maintain a routing table configured to
map a pipe identifier of the pipe (202) to a corresponding pair of gate (204) and application gate (205); and
map the gate (204) to the corresponding host (201);
wherein the host controller (207) is configured to update the routing table in response to a pipe (202) being created and a pipe (202) being deleted.

11. Communication device (200) according to any one of claims 8 to 10,
wherein the host controller (207) comprises a plurality of gates (204), wherein each gate (204) of the plurality of gates (204) is configured to provide access to a different RF communication function (206), and wherein the host controller (207) is configured to route communication for each gate (204) of the plurality of gates (204) to a plurality of hosts (201) via a plurality of simultaneously open pipes (202).

12. Communication device (200) according to any one of claims 8 to 11,
wherein the at least one gate (204) is provided per specific RF functionality, such that a single gate (204) is available per specific RF functionality (206), and wherein the host controller (207) is configured to create a pipe (202) from each enabled host (201) to the single gate (204) to enable the specific RF functionality (206) for each enabled host (201).

13. Communication device (200) according to any one of claims 8 to 12,
wherein the host controller (207) is configured to:
multiplex the pipes (202) between the gate (204) and the application gates (205) via a single physical interface (SWP).

14. Communication device (200) according to any one of claims 8 to 13,
wherein the host controller (207) is configured to:
operate a plurality of logical service interfaces (LSI), wherein each LSI of the plurality of LSI is associated with a logical service; and
map each LSI to a pipe (202).

15. A computer program product, comprising:
computer-readable medium bearing instructions executable by a communication device,
wherein the instructions, when executed by the communication device, cause the communication device to perform steps of the method according to any one of claims 1 to 7.
